# EUROPEAN PATENT APPLICATION

(11) **EP 2 730 752 A2**
(43) Date of publication of application: **14.05.2014**
(21) Application number: 13192213.0
(22) Date of filing: 08.11.2013
(51) Int. Cl.: F01D 21/00, F01D 17/16

(54) **A system and method for improving gas turbine perfomrance at part-load operation**

(30) Priority: 09.11.2012 US 201213673117
(71) Applicant: General Electric Company, Schenectady, New York 12345 (US)
(72) Inventor: Chiu, Ya-Tien, Greenville, SC South Carolina 29615 (US); Stampfli, John David, Greenville, SC South Carolina 29615 (US); Selmeier, Rudolf, 85748 Garching bei Munchen (DE)
(74) Representative: Cleary, Fidelma

(57) **Abstract**

A compressor section (12) of a gas turbine (10) generally includes a stage (30) of inlet guide vanes positioned adjacent to an inlet (14) of the compressor section and a stage (32) of rotor blades disposed downstream from the inlet guide vanes. A stage (34) of stator vanes is positioned downstream from the stage of rotor blades. The stage of stator blades includes a row (62) of leading guide vanes having a trailing edge. A row (64) of trailing guide vanes coupled to an actuator is disposed between two corresponding adjacent leading guide vanes. Each of the trailing guide vanes includes a trailing edge. The leading edge of each trailing guide vane is disposed upstream of the trailing edge of a corresponding leading guide vane when the trailing guide vane is in an open position and downstream from the trailing edge of the corresponding leading guide vane when the trailing guide vane is in a closed position.

## Description

### FIELD OF THE INVENTION

The present invention generally involves a compressor of a gas turbine. More particularly, the invention relates to improving the efficiency of the compressor at a part-load operating condition.

### BACKGROUND OF THE INVENTION

Gas turbines are widely used in industrial and power generation operations. A typical gas turbine may include a compressor section, a combustor downstream from the compressor section, and a turbine section downstream from the combustor. A working fluid such as ambient air flows into the compressor section where it is compressed before flowing into the combustor. The compressed working fluid is mixed with a fuel and burned within the combustor to generate combustion gases having a high temperature, pressure, and velocity. The combustion gases flow from the combustor and expand through the turbine section to rotate a shaft and to produce work.

In particular gas turbines, the compressor section may include a row of inlet guide vanes disposed generally adjacent to an inlet of the compressor section. In addition or in the alternative, the compressor section may include a row of variable stator vanes downstream from the inlet guide vanes. In certain gas turbine designs, the compressor section may include multiple rows of the variable stator vanes. Typically, a row of rotatable blades is disposed between the inlet guide vanes and the variable stator vanes. During various operating conditions, such as startup and shut down of the gas turbine, the inlet guide vanes and the variable stator vanes may be actuated between an open position and a closed position so as to increase or decrease a flow rate of the working fluid entering the compressor section of the gas turbine.

When the gas turbine enters an operating condition known in the industry as "part-load operation," the inlet guide vanes and the variable stator vanes are actuated to the closed position to minimize airflow through the gas turbine. However, closure of the inlet guide vanes and the variable stator vanes during part-load operation may result in a choked flow condition on the inlet guide vanes and, in particular at the variable stator vanes.

The choked flow condition may be most severe on the row or rows of variable stator vanes positioned downstream from the inlet guide vanes and a first row of the rotatable blades. As a result, a passage shock may form on a pressure side of the variable stator vanes, thereby reducing compressor efficiency at the part-load operating condition. Therefore, an improved system and method for controlling the working fluid flow rate through the compressor section of the gas turbine during part-load operation would be useful.

### BRIEF DESCRIPTION OF THE INVENTION

Aspects and advantages of the invention are set forth below in the following description, or may be obvious from the description, or may be learned through practice of the invention.

One embodiment of the present invention is a compressor section of a gas turbine having a stage of inlet guide vanes positioned adjacent to an inlet of the compressor section. A stage of rotor blades is disposed downstream from the stage of inlet guide vanes, and a stage of stator vanes is positioned downstream from the stage of rotor blades. The stage of stator blades generally includes a row of leading guide vanes. Each leading guide vane includes a leading edge, a trailing edge, a pressure side and a suction side. A row of trailing guide vanes is coupled to an actuator. Each trailing guide vane includes a leading edge, a trailing edge, a pressure side and a suction side. Each trailing guide vane is disposed between two corresponding adjacent leading guide vanes. The leading edge of each trailing guide vane is disposed upstream of the trailing edge of a corresponding leading guide vane when the trailing guide vane is in an open position. The leading edge of each trailing guide vane is positioned downstream from the trailing edge of the corresponding leading guide vane when the trailing guide vane is in a closed position.

Another embodiment of the present invention is a gas turbine. The gas turbine generally includes a compressor section, a combustor downstream from the compressor section, and a turbine section downstream form the combustor. The compressor section comprising generally includes an inlet, a stage of inlet guide vanes adjacent to the inlet, and a stage of rotor blades disposed downstream from the stage of inlet guide vanes. A row of leading guide vanes is positioned downstream from the stage of rotor blades. Each leading guide vane has a leading edge, a trailing edge, a pressure side and a suction side. A row of trailing guide vanes is coupled to an actuator. Each trailing guide vane includes a leading edge, a trailing edge, a pressure side and a suction side. The leading edge of each trailing guide vane is disposed upstream of the trailing edge of a corresponding leading guide vane when the trailing guide vane is in an open position. The leading edge of each trailing guide vane is positioned downstream from the trailing edge of the corresponding leading guide vane when the trailing guide vane is in a closed position.

The present invention may also include a method for improving compressor performance during part-load operation. The method generally includes drawing air into an inlet of the compressor. The air is directed through a closed stage of inlet guide vanes. The air is then directed through a stage of rotor blades and through a row of leading guide vanes. The air is then directed through a closed row of trailing guide vanes.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Fig. 1 illustrates an example of a known gas turbine;
Fig. 2 illustrates a portion of a compressor section of a gas turbine according to at least one embodiment of the present disclosure;
Fig. 3 illustrates a stage of inlet guide vanes, a stage of rotor blades and a stage of stationary vanes of the compressor section as shown in Fig. 2, according to at least one embodiment of the present disclosure; and
Fig. 4 illustrates a stage of inlet guide vanes, a stage of rotor blades and a stage of stationary vanes of the compressor section as shown in Fig. 2, according to at least one embodiment of the present disclosure; and
Fig. 5 illustrates a stage of inlet guide vanes, a stage of rotor blades and a stage of stationary vanes of the compressor section as shown in Fig. 2 according to at least one embodiment of the present disclosure.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a compressor section of a gas turbine having a stage of inlet guide vanes, a stage of rotor blades downstream from the stage of inlet guide vanes and a stage of stationary vanes downstream from the stage of rotor blades. The stage of stationary vanes generally includes a row of leading guide vanes and a row of trailing guide vanes. During part-load operation of the gas turbine, the row of inlet guide vanes and the row trailing guide vanes are closed to minimize an air flow rate through the gas turbine, and the leading guide vanes are generally aligned with respect to air flowing downstream from the stage of rotor blades, thereby preventing the formation and/or reducing the effects of a pressure shock on the trailing guide vanes. As a result, the overall efficiency of the compressor section and/or the gas turbine may be improved during part-load operation.

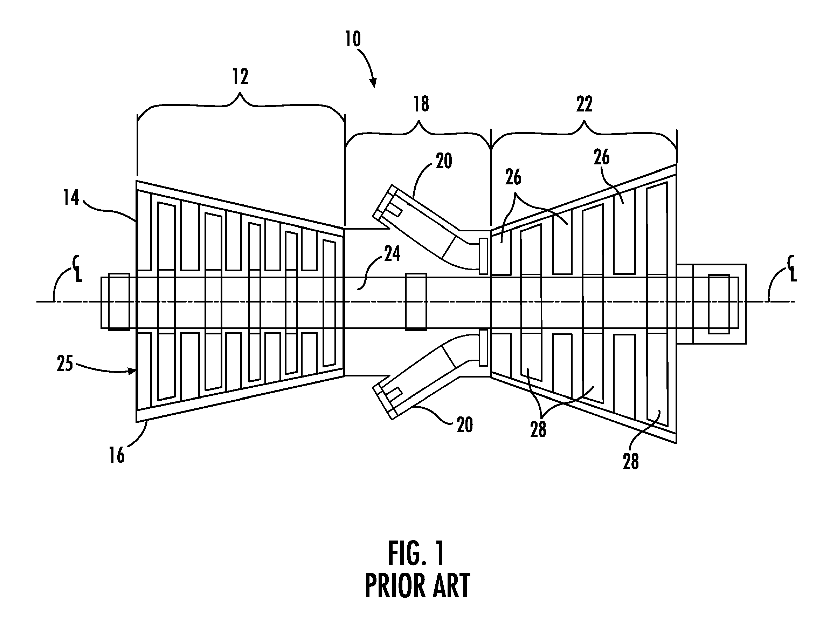

Referring now to the drawings, Fig. 1 illustrates an example of a known gas turbine 10. As shown, the gas turbine 10 generally includes a compressor section 12 having an inlet 14 disposed at an upstream end of the gas turbine 10, and a casing 16 that at least partially surrounds the compressor section 12. The gas turbine 10 further includes a combustion section 18 having a combustor 20 downstream from the compressor section 12, and a turbine section 22 downstream from the combustion section 18. A shaft 24 extends axially through the gas turbine 10. As shown, the combustion section 18 may include a plurality of the combustors 20.

In operation, air 25 is drawn into the inlet 14 of the compressor section 12 and is compressed. The compressed air flows into the combustion section 18 and is mixed with fuel in the combustor 20 to form a combustible mixture. The combustible mixture is burned in the combustor 20, thereby generating a hot gas that flows from the combustor 20 into the turbine section 22 where the hot gas rapidly expands as it flows through alternating stages of stationary nozzles 26 and turbine rotor blades 28 disposed within the turbine section 22 along an axial centerline of the shaft 24. Thermal and/or kinetic energy is transferred from the hot gas to each stage of the turbine rotor blades 28, thereby causing the shaft 24 to rotate and produce mechanical work. The shaft 24 may be coupled to a load such as a generator (not shown) so as to produce electricity. In addition or in the alternative, the shaft 24 may be used to drive the compressor section 12 of the gas turbine.

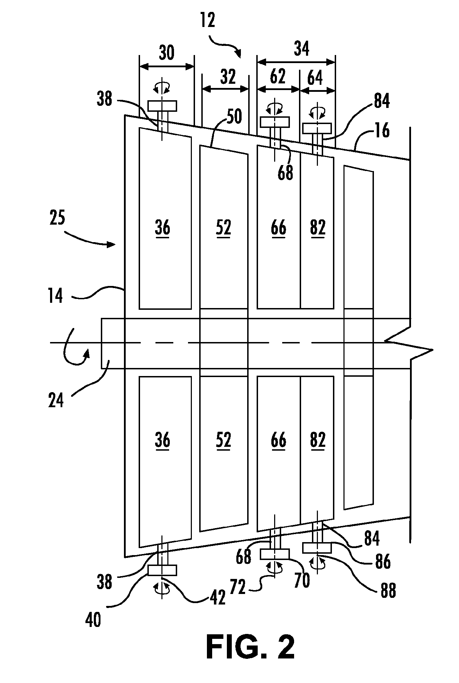

Fig. 2 illustrates a portion of the compressor section 12 of the gas turbine 10 according to at least one embodiment of the present disclosure. As shown, the compressor section 12 generally includes a stage 30 of inlet guide vanes disposed substantially adjacent to the inlet 14 of the compressor section 12, a stage 32 of rotor blades disposed downstream from the stage 30 of inlet guide vanes, and a stage 34 of stationary guide vanes downstream from the stage 32 of rotor blades.

The stage 30 of inlet guide vanes generally includes a plurality of individual airfoil shaped inlet guide vanes 36 coupled to the casing 16 and arranged circumferentially around the shaft 24. A spindle 38 or other mounting mechanism extends radially outward from each inlet guide vane 36. The spindle 38 may extend at least partially through the casing 16.

An actuating mechanism 40 such as a rotary actuator may be coupled to each or some of the inlet guide vanes 36. In particular embodiments, the actuating mechanism 40 is coupled to the spindle 38 of each or some of the inlet guide vanes 36. The actuating mechanism 40 may comprise any mechanical and/or electrical device suitable for rotating the inlet guide vanes 36 about a rotational axis 42 that extends generally radially through the spindle 38. The actuating mechanism 40 may be configured to rotate the inlet guide vanes 36 between an open and a closed position.

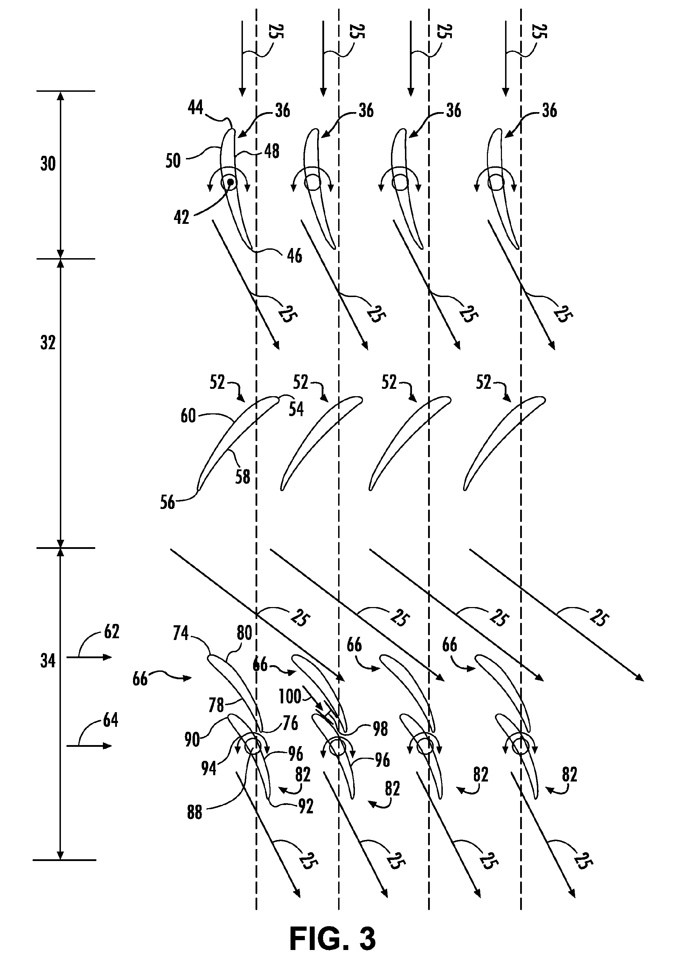

Each inlet guide vane 36 extends generally radially inward from the casing 16 towards the shaft 24. Fig. 3 illustrates a top view of the stage 30 of the inlet guide vanes 36, the stage 32 of the rotor blades 52 and the stage 34 of stationary guide vanes as shown in Fig. 2. As shown in Fig. 3, each inlet guide vane 36 generally includes a leading edge 44, a trailing edge 46, a pressure side 48 on one side, and a suction side 50 on an opposing side.

As shown in Fig. 3, the open position of the inlet guide vanes 36 generally corresponds with the leading edge 44 of each inlet guide vane 36 being substantially aligned with respect to a direction of flow of the air 25 traveling from the inlet 14 (Fig. 2) of the compressor section 12. As a result, the open position generally corresponds to a maximum or least restrictive air flow rate through the stage 30 of the inlet guide vanes 36. Generally, the inlet guide vanes 36 may be rotated to the open position when the gas turbine 10 is operated at a full-speed/full-load condition and/or when a load demand on the gas turbine 10 increases.

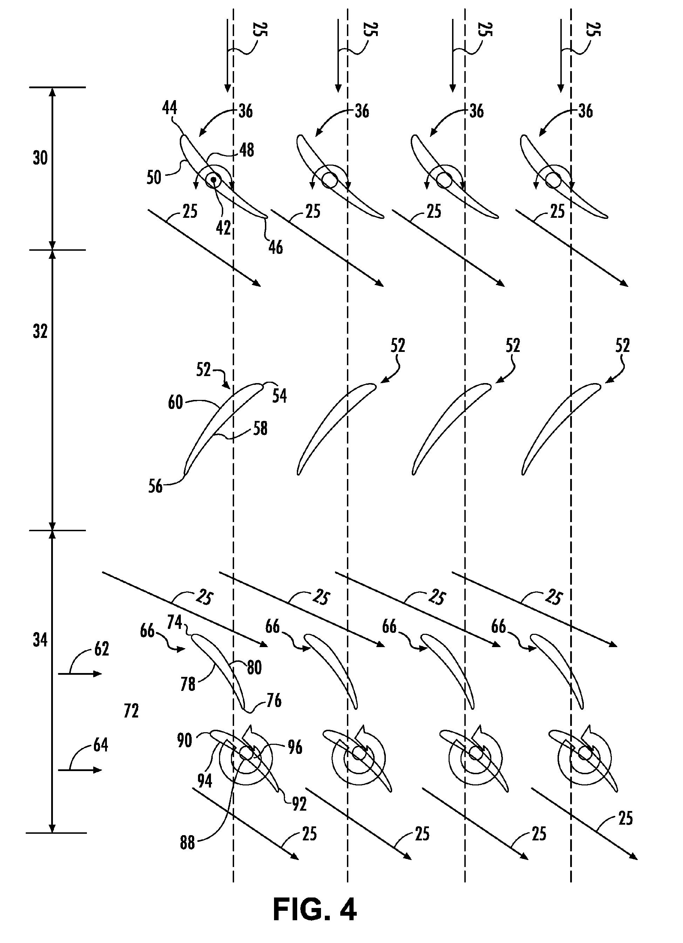

As shown in Fig. 4, the closed position generally corresponds to the pressure side 48 of each inlet guide vane 36 facing the direction of flow of the air 25 flowing from the inlet 14 (Fig. 2). For example, in the closed position the direction of flow of the air 25 flowing from the inlet 14 (Fig. 2) of the compressor section 12 may be oblique or substantially perpendicular to the pressure side 48. As a result, the closed position generally corresponds to a minimum air flow rate through the stage 30 of the inlet guide vanes 36. Generally, the stage 30 of the inlet guide vanes 36 may be rotated to the closed position when the gas turbine 10 is operated at a part-load condition, a part-speed condition and/or during start-up of the gas turbine 10. In various embodiments, the stage 30 of the inlet guide vanes 36 may be rotated about the rotational axis 42 to any position between the open and closed positions so as to control and/or improve overall performance of the compressor section 12.

As shown in Fig. 2, the stage 32 of rotor blades generally includes a plurality of individual airfoil shaped rotor blades 52 arranged circumferentially around the shaft 24. Each rotor blade 52 extends generally radially outward from the shaft 24. The rotor blades 52 may be coupled to the shaft 24 and/or to one or more rotor disks (not shown) that extends circumferentially around the shaft 24. The stage 32 of the rotor blades 52 rotates with the shaft 24, thereby drawing the air 25 into the inlet 14 of the compressor section 12 and through the stage 30 of the inlet guide vanes 36.

As shown in Fig. 3, each rotor blade 52 generally includes a leading edge 54, a trailing edge 56, a pressure side 58 and an opposing suction side 60. It should be appreciated by one skilled in the art that the compressor section 12 may include a plurality of stages 32 of the rotor blades 52 as described herein spaced along the axial center line of the shaft 24.

As shown in Fig. 2, the stage 34 of the stationary guide vanes generally comprises a row 62 of leading guide vanes and a row 64 of trailing guide vanes. The row 62 of leading guide vanes and the row 64 of trailing guide vanes are stationary with respect to an axis of rotation about the centerline of the shaft 24. In other words, the row 62 of leading guide vanes and the row 64 of trailing guide vanes do not rotate with the shaft 24.

As shown in Fig. 2, the row 62 of leading guide vanes generally comprises a plurality of airfoil shaped leading guide vanes 66 arranged circumferentially around the shaft 24. The leading guide vanes 66 may be fixed to the casing 16. In particular embodiments, each leading guide vane 66 includes a spindle 68 or other mounting mechanism that extends radially outward from the leading guide vane 66. The spindle 68 may extend at least partially through the casing 16.

An actuating mechanism 70 such as a rotary actuator may be coupled to each or some of the leading guide vanes 66. In particular embodiments, the actuating mechanism 70 is coupled to the spindle 68. The actuating mechanism 70 may comprise any mechanical and/or electrical device suitable for rotating the leading guide vanes 66 about a rotational axis 72 that extends generally radially through the spindle 68.

As shown in Fig. 2, each leading guide vane 66 extends generally radially inward from the casing 16 towards the shaft 24. As shown in Fig. 3, each leading guide vane 66 generally includes a leading edge 74, a trailing edge 76, a pressure side 78 on one side, and a suction side 80 on an opposing side. The leading edge 74 may be fixed in a particular position with respect to a direction of flow of the air 25 flowing from the stage 32 of the rotor blades 52.

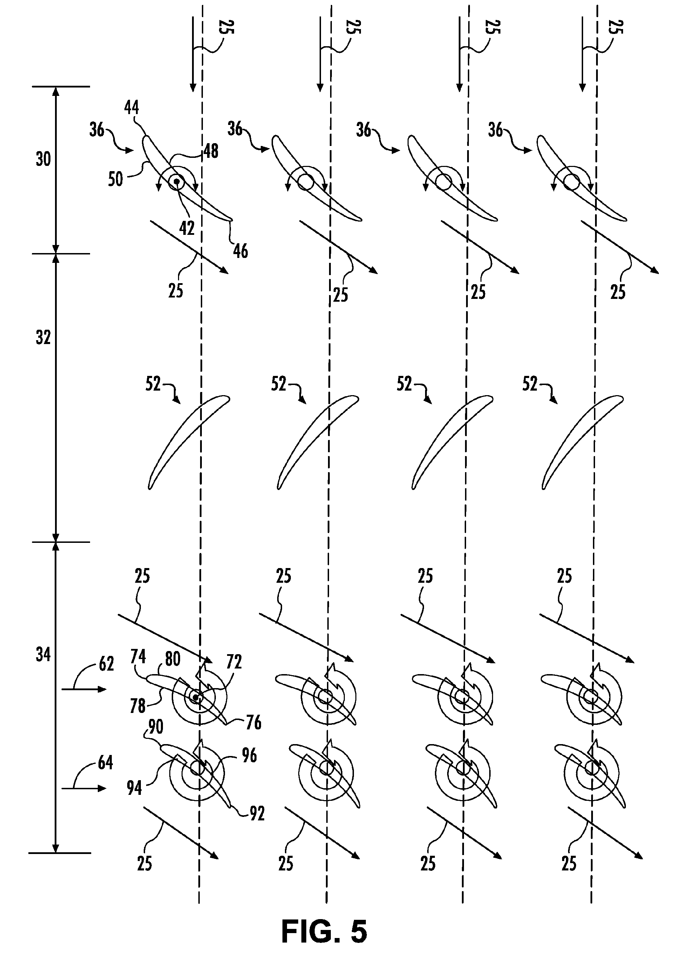

In various embodiments, the leading edge 74 of each leading guide vane 66 is generally aligned with respect to a direction of flow of the air 25 flowing from the stage 32 of the rotor blades 52. In alternate embodiments, as shown in Fig. 5, the actuating mechanism 70 may be configured to rotate the leading guide vanes 66 so as to manipulate the position of the leading edge 74 with respect to the direction of flow of the air 25 flowing from the stage of rotor blades 32 such as when the gas turbine is operated in a part speed condition, thereby optimizing the performance of the compressor section 12 and/or the overall efficiency of the gas turbine 10.

As shown in Fig. 2, the row 64 of trailing guide vanes generally comprises a plurality of airfoil shaped trailing guide vanes 82 arranged circumferentially around the shaft 24. The trailing guide vanes 82 may be fixed to the casing 16. Each trailing guide vane 82 is spaced substantially circumferentially between two corresponding adjacent leading guide vanes 66. In particular embodiments, each trailing guide vane 82 includes a spindle 84 that extends radially outward from the trailing guide vane 82. The spindle 84 may extend at least partially through the casing 16.

An actuating mechanism 86 such as a rotary actuator may be coupled to each or some of the trailing guide vanes 82. In various embodiments, the actuating mechanism 86 is coupled to the spindle 84 of each or some of the trailing guide vanes 82. The actuating mechanism 86 may comprise any mechanical and/or electrical device suitable for rotating the trailing guide vanes 82 about a rotational axis 88 that extends generally radially through each spindle 84. The actuating mechanism 86 may be configured to rotate the trailing guide vanes 82 between an open and a closed position.

As shown in Fig. 2, each trailing guide vane 82 extends generally radially inward from the casing 16 towards the shaft 24. As shown in Fig. 3, each trailing guide vane 82 generally includes a leading edge 90, a trailing edge 92, a pressure side 94 on one side, and a suction side 96 on an opposing side.

When the trailing guide vanes 84 are in the open position, as shown in Fig. 3, the leading edge 90 of each trailing guide vane 82 is positioned forward of the trailing edge 76 of a corresponding leading guide vane 66. In the open position a slot 98 may be defined between the suction side 96 of each trailing guide vane 82 and the pressure side 78 of a corresponding adjacent leading guide vane 66. The slot 98 may at least partially define a flow path 100 between each trailing guide vane 82 and a corresponding adjacent leading guide vane 66.

In particular embodiments, as shown in Fig. 5, the leading edge 90 of each trailing guide vane 82 is positioned downstream from the trailing edge 76 of a corresponding leading guide vane 66 when the row 64 of the trailing guide vanes 82 are in the closed position. In the closed position, each trailing guide vane 82 is rotated such that the suction side 96 is at an oblique angle with respect to a direction of flow of the air 25 passing through the row of leading guide vanes 62. As a result, the closed position generally corresponds to a minimum air flow rate through the row of trailing guide vanes 82. In alternate embodiments, the trailing guide vanes 82 may be rotated to any position between the open and closed positions so as to control and/or improve the performance of the compressor section 12.

In one embodiment, as shown in Fig. 4, the stage 30 of the inlet guide vanes 36 and the row 64 of trailing guide vanes 82 are in the closed position, and the leading edge 74 of each leading guide vane 66 is substantially aligned with respect to the direction of flow of the air 25 flowing from the stage 32 of rotor blades 52. In this manner, passage shock on the pressure side 78 of each leading guide vane 66 may be reduced and/or prevented while operating the gas turbine 10 in a part-load condition. As a result, compressor section 12 losses may be reduced, thereby improving overall compressor section 12 and/or overall gas turbine efficiency.

It should be appreciated by one of ordinary skill in the art that at least one stage 30 of the inlet guide vanes 36, the row 62 of the leading guide vanes 66 and the row 64 of the trailing guide vanes 82 may be rotated to any position allowed by the actuating mechanisms 40, 70 or 86 respectfully, so as to reduce shock on the suction side 78 of the leading guide vanes 66, thereby optimizing the overall performance of the gas turbine 10 and/or the compressor section 12. It should be appreciated that the row 62 of the leading guide vanes 66 and the row 64 of the trailing guide vanes 82 are actuated independently.

The embodiments shown in Figs. 2 through 5 may also provide a method for improving the performance of the compressor section 12, particularly during part-load operation. The method generally includes drawing the air 25 into the inlet 14 of the compressor section 12. The air 25 is directed through the stage 30 of the inlet guide vanes 36 which are rotated to the closed position. The air 25 is directed through the stage 32 of the rotor blades 52 and directed through the row 62 of the leading guide vanes 66. The air 25 is then directed through the row 64 of the trailing guide vanes 82 which are rotated to the closed position. The method may further include actuating the stage 30 of the inlet guide vanes 36 between the closed position and the open position during and/or when transitioning to or from part-load operation. The method may further include actuating the row 64 of the trailing guide vanes 82 between the closed position and the open position during and/or when transitioning to or from part-load operation. The method may further include aligning the leading edge 74 of each leading guide vane 66 with the direction of flow of the air 25 directed from the stage 32 of the rotor blades 52.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

Various aspects and embodiment of the present invention are defined by the following numbered clauses:
1. A compressor section of a gas turbine, comprising:
   a. a stage of inlet guide vanes adjacent to an inlet of the compressor section;
   b. a stage of rotor blades downstream from the stage of inlet guide vanes;
   c. a stage of stator vanes downstream from the stage of rotor blades, comprising:
      i. a row of leading guide vanes, each leading guide vane having a leading edge, a trailing edge, a pressure side and a suction side;
      ii. a row of trailing guide vanes coupled to an actuator, each trailing guide vane having a leading edge, a trailing edge, a pressure side and a suction side, each trailing guide vane disposed between two corresponding adjacent leading guide vanes, each trailing guide vane movable between an open and a closed position; and
      iii. wherein the leading edge of each trailing guide vane is upstream of the trailing edge of a corresponding leading guide vane when the trailing guide vane is in the open position, and the leading edge of each trailing guide vane is downstream from the trailing edge of the corresponding leading guide vane when the trailing guide vane is in the closed position.
2. The compressor section as in clause 1, wherein the stage of stator vanes further comprises an actuator coupled to the row of leading guide vanes.
3. The compressor section as in clause 1 or 2, wherein the leading edge of each leading guide vane is aligned with respect to a flow direction of air flowing from the stage of rotor blades.
4. The compressor section as in any preceding clause, further comprising a flow path at least partially defined between the pressure side of each leading guide vane and the suction side of a corresponding adjacent trailing guide vane.
5. The compressor section as in any preceding clause, wherein the suction side of each trailing guide vane is substantially perpendicular to a direction of flow of air flowing from the row of leading guide vanes.
6. The compressor section as in any preceding clause, further comprising an actuator connected to the stage inlet guide vanes, wherein the stage of inlet guide vanes are movable between an open and a closed position.
7. The compressor section as in any preceding clause, wherein the leading edge of each of the leading guide vanes is generally aligned with respect to a direction of flow of air flowing from the stage of rotor blades.
8. A gas turbine, comprising:
   a. a compressor section, a combustor downstream from the compressor section, and a turbine section downstream from the combustor, the compressor section comprising:
      i. an inlet;
      ii. a stage of inlet guide vanes adjacent to the inlet;
      iii. a stage of rotor blades downstream from the stage of inlet guide vanes;
      iv. a row of leading guide vanes downstream from the stage of rotor blades, each leading guide vane having a leading edge, a trailing edge, a pressure side and a suction side;
      v. a row of trailing guide vanes coupled to an actuator, each trailing guide vane having a leading edge, a trailing edge, a pressure side and a suction side, each trailing guide vane disposed between two corresponding adjacent leading guide vanes, each trailing guide vane movable between an open and a closed position; and
      vi. wherein the leading edge of each trailing guide vane is upstream of the trailing edge of a corresponding leading guide vane when the trailing guide vane is in the open position, and the leading edge of each trailing guide vane is downstream from the trailing edge of the corresponding leading guide vane when the trailing guide vane is in the closed position.
9. The gas turbine as in any preceding clause, wherein the leading edge of each leading guide vane is aligned with respect to a flow direction of air flowing from the stage of rotor blades.
10. The gas turbine as in any preceding clause, wherein the stage of inlet guide vanes are movable between an open and a closed position.
11. The compressor section as in any preceding clause, wherein the leading edge of each of the leading guide vanes is generally aligned with respect to a direction of flow of air flowing from the stage of rotor blades.
12. The gas turbine as in any preceding clause, further comprising an actuator connected to the stage of inlet guide vanes.
13. The gas turbine as in any preceding clause, wherein stage of inlet guide vanes includes a plurality of inlet guide vanes each having a pressure side, the pressure side of the stage of inlet guide vanes being substantially perpendicular to a flow direction of air flowing from the row of leading guide vanes.
14. The gas turbine as in any preceding clause, further comprising an actuator connected to the row of leading guide vanes.
15. The gas turbine as in any preceding clause, wherein the actuator connected to the row of leading guide vanes and the actuator connected to the trailing guide vanes are individually controlled.
16. The gas turbine as in any preceding clause, wherein the suction side of each trailing guide vane is substantially perpendicular to a direction of flow of air flowing from the row of leading guide vanes.
17. A method for improving compressor performance during part-load operation, the method comprising:
   a. drawing air into an inlet of the compressor;
   b. directing the air through a closed stage of inlet guide vanes;
   c. directing the air through a stage of rotor blades;
   d. directing the air through a row of leading guide vanes; and
   e. directing the air through a closed row of trailing guide vanes.
18. The method as in any preceding clause, further comprising actuating the stage of inlet guide vanes between a closed position and an open position.
19. The method as in any preceding clause, further comprising actuating the row of trailing guide vanes between a closed position and an open position.
20. The method as in any preceding clause, further comprising aligning the leading guide vanes with the air directed from the stage of rotor blades.

## Claims

1. A compressor section (12) of a gas turbine (10), comprising:
a. a stage (30) of inlet guide vanes adjacent to an inlet (14) of the compressor section;
b. a stage (32) of rotor blades downstream from the stage of inlet guide vanes;
c. a stage (34) of stator vanes downstream from the stage of rotor blades, comprising:
i. a row (62) of leading guide vanes (66), each leading guide vane having a leading edge (74), a trailing edge (76), a pressure side (78) and a suction side (80);
ii. a row (64) of trailing guide vanes (82) coupled to an actuator (86), each trailing guide vane having a leading edge (90), a trailing edge (92), a pressure side (94) and a suction side (96), each trailing guide vane disposed between two corresponding adjacent leading guide vanes, each trailing guide vane movable between an open and a closed position; and
iii. wherein the leading edge of each trailing guide vane is upstream of the trailing edge of a corresponding leading guide vane when the trailing guide vane is in the open position, and the leading edge of each trailing guide vane is downstream from the trailing edge of the corresponding leading guide vane when the trailing guide vane is in the closed position.

2. The compressor section (12) as in claim 1, wherein the stage (34) of stator vanes further comprises an actuator (70) coupled to the row (62) of leading guide vanes (66).

3. The compressor section as in either of claim 1 to 2, wherein the leading edge of each leading guide vane (66) is aligned with respect to a flow direction of air flowing from the stage (32) of rotor blades.

4. The compressor section (12) as in any preceding claim, further comprising a flow path at least partially defined between the pressure side of each leading guide vane (66) and the suction side of a corresponding adjacent trailing guide vane (82).

5. The compressor section (12) as in any preceding claim, wherein the suction side of each trailing guide vane (82) is substantially perpendicular to a direction of flow of air flowing from the row of leading guide vanes (66).

6. The compressor section (12) as in any preceding claim, further comprising an actuator connected to the stage of inlet guide vanes, wherein the stage of inlet guide vanes are movable between an open and a closed position.

7. The compressor section (12) as in claim 6, wherein the leading edge of each of the leading guide vanes is generally aligned with respect to a direction of flow of air flowing from the stage of rotor blades.

8. A gas turbine (10), comprising:
a. a compressor section (12), a combustor (18) downstream from the compressor section, and a turbine section (22) downstream from the combustor, the compressor section comprising:
i. an inlet (14);
ii. a stage (30) of inlet guide vanes adjacent to the inlet;
iii. a stage (32) of rotor blades downstream from the stage of inlet guide vanes;
iv. a row (62) of leading guide vanes (66) downstream from the stage of rotor blades, each leading guide vane having a leading edge (74), a trailing edge (76), a pressure side (78) and a suction side (80);
v. a row (64) of trailing guide vanes (82) coupled to an actuator (86), each trailing guide vane having a leading edge (90), a trailing edge (92), a pressure side (94) and a suction side (96), each trailing guide vane disposed between two corresponding adjacent leading guide vanes, each trailing guide vane movable between an open and a closed position; and
vi. wherein the leading edge of each trailing guide vane is upstream of the trailing edge of a corresponding leading guide vane when the trailing guide vane is in the open position, and the leading edge of each trailing guide vane is downstream from the trailing edge of the corresponding leading guide vane when the trailing guide vane is in the closed position.

9. The gas turbine (10) as in claim 8, wherein the leading edge of each leading guide vane is aligned with respect to a flow direction of air flowing from the stage of rotor blades.

10. The gas turbine (10) as in either of claim 8 or 9, wherein the stage of inlet guide vanes are movable between an open and a closed position.

11. The compressor section as in claim 10, wherein the leading edge of each of the leading guide vanes is generally aligned with respect to a direction of flow of air flowing from the stage of rotor blades.

12. A method for improving compressor (12) performance during part-load operation, the method comprising:
a. drawing air into an inlet (14) of the compressor (12);
b. directing the air through a closed stage (30) of inlet guide vanes;
c. directing the air through a stage (32) of rotor blades;
d. directing the air through a row (62) of leading guide vanes (66); and
e. directing the air through a closed row (64) of trailing guide vanes (82).

13. The method as in claim 12, further comprising actuating the stage (30) of inlet guide vanes between a closed position and an open position.

14. The method as in either of claim 12 or 13, further comprising actuating the row (64) of trailing guide vanes (82) between a closed position and an open position.

15. The method as in any of claims 12 to 14, further comprising aligning the leading guide vanes (66) with the air directed from the stage of rotor blades.
